# EUROPÄISCHE PATENTANMELDUNG

(11) **EP 4 581 990 A1**
(43) Veröffentlichungstag der Anmeldung: **09.07.2025**
(21) Anmeldenummer: 24217357.3
(22) Anmeldetag: 04.12.2024
(51) Int. Cl.: A47J 36/32

(54) **KOCHGESCHIRR, KOCHSYSTEM UND VERFAHREN ZUM BETREIBEN**

(30) Priorität: 08.01.2024 DE 102024100310
(71) Anmelder: Miele & Cie. KG, 33332 Gütersloh (DE)
(72) Erfinder: Hölscher, Britta, 30167 Hannover (DE); Müller, Christoph, 32289 Rödinghausen (DE); Niermeier, Carlos, 49080 Osnabrück (DE)

(57) **Zusammenfassung**

Kochgeschirr (1) umfassend einen Kochgeschirrgrundkörper (2), ein Anbauteil (3) und eine Kommunikationseinrichtung (4), wobei der Kochgeschirrgrundkörper (2) einen Boden (5) und eine Wandung (6) umfasst und wobei durch den Boden (5) und die Wandung (6) ein Aufnahmevolumen (7) begrenzt wird. Das Anbauteil (3) ist an der Außenseite (8) der Wandung (6) angeordnet und die Kommunikationseinrichtung (4) umfasst eine Bluetooth-Schnittstelle (9) zur drahtlosen Kommunikation mit einer Kochfeldeinrichtung (50) umfasst. Die Kommunikationseinrichtung (3) umfasst weiterhin eine NFC-Einrichtung (10), wobei die NFC-Einrichtung (10) dem Anbauteil (3) zugeordnet ist. Das Kochsystem (100) umfasst ein solches Kochgeschirr und eine Kochfeldeinrichtung (50), wobei die Kochfeldeinrichtung (50) eine Steuereinrichtung (51), eine Heizeinrichtung (52), eine Aufstellfläche (53) für Kochgeschirr (1) und eine Kommunikationseinrichtung (54) mit einer Bluetooth-Schnittstelle (55) und einer NFC-Einrichtung (55) umfasst. Bei dem Verfahren zum Betreiben eines solchen Kochsystems (100) wird zur initialen Kopplung per Bluetooth von Kochgeschirr (1) und Kochfeldeinrichtung (50) die NFC-Einrichtung (10) des Kochgeschirrs (1) in eine ausreichende räumliche Nähe zu der NFC-Einrichtung (56) der Kochfeldeinrichtung (50) gebracht wird, um die Kopplung per Bluetooth freizugeben.

## Beschreibung

Die vorliegende Erfindung betrifft ein Kochgeschirr umfassend wenigstens einen Kochgeschirrgrundkörper, wenigstens ein Anbauteil und wenigstens eine Kommunikationseinrichtung. Der Kochgeschirrgrundkörper umfasst dabei wenigstens einen Boden und wenigstens eine Wandung, wobei durch den Boden und die Wandung wenigstens ein Aufnahmevolumen begrenzt wird. Das Anbauteil ist an der Außenseite der Wandung angeordnet. Die Kommunikationseinrichtung umfasst wenigstens eine Bluetooth-Schnittstelle zur drahtlosen Kommunikation mit wenigstens einer Kochfeldeinrichtung. Die vorliegende Erfindung betrifft zudem ein Kochsystem umfassend wenigstens ein solches Kochgeschirr und wenigstens eine Kochfeldeinrichtung. Weiterhin betrifft die vorliegende Erfindung ein Verfahren zum Betreiben eines solchen Kochsystems.

Modernes Kochgeschirr bietet einem Benutzer je nach Ausgestaltung eine Vielzahl von zusätzlichen Funktionen, die beispielsweise bei einem Kochvorgang unterstützen können oder sogar Automatikprogramme bereitstellen.

Um diese Funktionen optimal nutzen zu können, muss eine Kommunikation zwischen Kochgeschirr und Kochfeld bestehen, sodass z. B. Sensordaten von dem Kochgeschirr an das Kochfeld übermittelt werden können, beispielsweise um allgemein Daten zu der Art des Kochgeschirrs oder aber auch Daten zum Anpassen der aktuellen Heizleistung zu übermitteln.

Die Datenübertragung erfolgt oft über eine Bluetooth-Schnittstelle. Dieser Kommunikationsweg ist prinzipiell sehr geeignet und zuverlässig. Wenn ein neues Kochgeschirr mit einem Kochfeld verwendet wird, muss zunächst eine initiale Paarung erfolgen. Hier muss jedoch sichergestellt werden, dass das neue Kochgeschirr tatsächlich mit dem entsprechenden Kochfeld gekoppelt wird. Da Bluetooth eine relativ große Reichweite, jedenfalls eine Reichweite von mehreren Metern hat, muss unter anderem sichergestellt werden, dass es zu keiner Fehlpaarung kommt. Auch ein sogenannter Remote-Betrieb muss verhindert werden.

Es ist daher die Aufgabe der vorliegenden Erfindung, die Paarung per Bluetooth zwischen Kochgeschirr und Kochfeldeinrichtung sicherer zu machen.

Diese Aufgabe wird gelöst durch ein Kochgeschirr mit den Merkmalen des Anspruchs 1, durch ein Kochsystem mit den Merkmalen des Anspruchs 8 und durch ein Verfahren zum Betreiben eines Kochsystems mit den Merkmalen des Anspruchs 9. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochgeschirr umfasst wenigstens einen Kochgeschirrgrundkörper, wenigstens ein Anbauteil und wenigstens eine Kommunikationseinrichtung. Der Kochgeschirrgrundkörper umfasst wenigstens einen Boden und wenigstens eine Wandung, wobei durch den Boden und die Wandung wenigstens ein Aufnahmevolumen begrenzt wird. Das Anbauteil ist an der Außenseite der Wandung des Kochgeschirrgrundkörpers angeordnet und die Kommunikationseinrichtung umfasst wenigstens eine Bluetooth-Schnittstelle zur drahtlosen Kommunikation mit wenigstens einer Kochfeldeinrichtung. Weiterhin umfasst die Kommunikationseinrichtung wenigstens eine NFC-Einrichtung, wobei die NFC-Einrichtung dem Anbauteil zugeordnet ist.

Dass die NFC-Einrichtung dem Anbauteil zugeordnet ist, heißt insbesondere, dass diese in bzw. an dem Anbauteil aufgenommen ist. Dabei kann die NFC-Einrichtung insbesondere fest in das Anbauteil integriert vorgesehen sein. Je nach Ausgestaltung kann die NFC-Einrichtung aber auch als separates Bauteil ausgebildet sein, wobei die NFC-Einrichtung dann bei Bedarf beispielsweise mittels eines Steckers in das Anbauteil eingesteckt wird.

Dass die NFC-Einrichtung dem Anbauteil zugeordnet ist, heißt erfindungsgemäß, dass die NFC-Einrichtung nicht dem Boden zugeordnet ist bzw. dass die NFC-Einrichtung derart angeordnet ist, dass sie nicht in Kontakt bzw. nicht in einer ausreichenden Nähe zu einer NFC-Einrichtung einer Kochfeldeinrichtung im normalen Kochbetrieb steht.

Weiterhin umfasst das Kochgeschirr vorzugsweise wenigstens eine Sensoreinrichtung, sodass insgesamt vorzugsweise ein sogenanntes Smartgeschirr durch das Kochgeschirr zur Verfügung gestellt wird. Dabei kann ein solches Kochgeschirr insbesondere als Pfanne, als Topf, als Bräter oder als anderes Kochgeschirr insbesondere zum Aufstellen auf eine Kochfeldeinrichtung ausgebildet sein.

Das erfindungsgemäße Kochgeschirr bietet viele Vorteile. Ein erheblicher Vorteil ist, dass ein zweiter Kommunikationskanal vorgesehen ist, der eine besonders sichere Kommunikation und insbesondere ein besonders sicheres initiales Bluetooth-Pairing ermöglicht. So ist es durch die spezielle Ausgestaltung vorgesehen, dass das Kochgeschirr aktiv in eine bestimmte Position gebracht werden muss, in welcher die NFC-Einrichtung des Kochgeschirrs in einer ausreichenden Nähe zu einer entsprechenden NFC-Einrichtung der Kochfeldeinrichtung gebracht wird, wodurch das Pairing bzw. das initiale Bluetooth-Pairing ermöglicht wird. Hierdurch wird insbesondere ein besonders sicheres Pairing zwischen Kochgeschirr und einer Kochfeldeinrichtung erreicht. Weiterhin kann je nach Ausgestaltung auch eine Erfüllung der Norm EN60335-2-6 Edition 7 erfüllt sein.

Bevorzugt umfasst das Anbauteil wenigstens eine Abdeckeinrichtung oder wird durch eine Abdeckeinrichtung bereitgestellt. Dabei kann eine solche Abdeckeinrichtung insbesondere Teil eines sogenannten Bedienpultes eines Smartgeschirrs sein, welches an der Außenseite des Kochgeschirrgrundkörpers angeordnet ist. Hinter einer solchen Abdeckeinrichtung können vorzugsweise Sensoren, Kabel zu Sensoren z. B. auch im Boden des Kochgeschirrgrundkörpers oder auch andere Bauteile untergebracht sein.

Besonders bevorzugt umfasst das Anbauteil wenigstens eine Bedieneinrichtung oder wird durch eine Bedieneinrichtung bereitgestellt. Eine solche Bedieneinrichtung kann beispielsweise Teil eines sogenannten Bedienpultes bzw. einer Abdeckung eines Smartgeschirrs oder auch Teil einer Griffeinrichtung sein.

In zweckmäßigen Ausgestaltungen umfasst das Anbauteil wenigstens eine Griffeinrichtung oder wird durch eine Griffeinrichtung bereitgestellt. So ist es insbesondere möglich, dass die NFC-Einrichtung in bzw. an einer Griffeinrichtung bzw. einem Griff eines Kochgeschirrs vorgesehen ist. Dabei kann jede Art von Griff zur Aufnahme einer NFC-Einrichtung vorteilhaft gewählt werden. Insbesondere kann auch ein langer Griff bzw. ein Stielgriff einer Pfanne oder aber auch ein herkömmlicher Griff eines Topfes zur Aufnahme einer NFC-Einrichtung vorgesehen sein.

Bevorzugt ist die Griffeinrichtung länglich ausgeformt und die NFC-Einrichtung ist an dem dem Kochgeschirrgrundkörper abgewandten Ende angeordnet. Ein solcher länglich geformter Griff ist insbesondere ein Stielgriff, wie er beispielsweise bei einer Pfanne eingesetzt wird.

In zweckmäßigen Ausgestaltungen umfasst das Anbauteil wenigstens einen Auflagepunkt und/oder wenigstens einer Auflagefläche. Eine solche Ausgestaltung kann vorteilhaft sein, da das Kochgeschirr zur initialen Bluetooth-Paarung in eine bestimmte Position gebracht werden muss, in welcher die NFC-Einrichtung des Kochgeschirrs in direktem bzw. ausreichenden Kontakt zu der NFC-Einrichtung der Kochfeldeinrichtung steht. Dann ist es besonders komfortabel, wenn das Kochgeschirr in dieser speziellen Pairing-Position selbstständig sicher aufliegt bzw. aufsteht, sodass ein Benutzer das Kochgeschirr nicht die ganze Zeit festhalten muss. Die Auflagefläche und/oder der Auflagepunkt kann vorzugsweise zusammen mit anderen Auflageflächen bzw. Auflagepunkten des Kochgeschirrgrundkörpers wirken.

Bevorzugt ist die NFC-Einrichtung in der normalen Aufstellposition bzw. in einer Kochposition an der der Kochfeldeinrichtung abgewandten Seite des Anbauteils angeordnet. So kann beispielsweise eine NFC-Einrichtung an der Oberseite einer Griffeinrichtung oder auch an bzw. in einem oberen Bereich einer Abdeckung bzw. eines Bedienpultes vorgesehen sein.

Das erfindungsgemäße Kochsystem umfasst wenigstens ein Kochgeschirr, wie es zuvor beschrieben wurde und wenigstens eine Kochfeldeinrichtung. Dabei umfasst die Kochfeldeinrichtung wenigstens eine Steuereinrichtung, wenigstens eine Heizeinrichtung wenigstens eine Aufstellfläche für Kochgeschirr und wenigstens eine Kommunikationseinrichtung mit wenigstens einer Bluetooth-Schnittstelle und wenigstens eine NFC-Einrichtung.

Bei einem derartigen System kann eine besonders sichere initiale Bluetooth-Paarung erfolgen, da wie zuvor beschrieben zur erfolgreichen Paarung von Kochgeschirr und Kochfeldeinrichtung über den Bluetooth-Kanal über einen zweiten Kommunikationskanal, nämlich die NFC-Einrichtung, eine weitere Verbindung erfolgen muss.

Auch das Kochsystem und bietet die Vorteile, wie sie zuvor schon für das erfindungsgemäße Kochgeschirr schier beschrieben wurden.

Das erfindungsgemäße Verfahren eignet sich zum Betreiben eines Kochsystems, wie es zuvor beschrieben wurde. Dabei wird zur initialen Kopplung bzw. Paarung per Bluetooth von Kochgeschirr und Kochfeldeinrichtung die NFC-Einrichtung des Kochgeschirrs in eine ausreichende räumliche Nähe zu der NFC-Einrichtung der Kochfeldeinrichtung gebracht, um die Kopplung per Bluetooth freizugeben.

Dass die Bluetooth-Kopplung bzw. Paarung freigegeben wird, heißt insbesondere, dass die Paarung bestätigt wird, bzw. dass z. B. ein Schlüssel für das Pairing über die NFC-Einrichtung übergeben wird, oder z. B. dass die Bluetooth-Kopplung durch die NFC-Einrichtung bzw. den Kontakt der beiden NFC-Einrichtungen überhaupt erst gestartet wird und/oder dergleichen.

Dabei ist die NFC-Einrichtung insbesondere derart an dem Kochgeschirr vorgesehen, dass das normale Aufstehen des Kochgeschirrs auf der Aufstellfläche der Kochfeldeinrichtung nicht ausreicht, um die initiale Bluetooth-Paarung zu aktivieren bzw. zu bestätigen, da dann keine ausreichende Nähe der NFC-Einrichtungen vorliegt.

Die NFC-Einrichtung der Kochfeldeinrichtung ist vorzugsweise direkt unterhalb der Aufstellfläche vorgesehen, wobei hier ein beliebiger Bereich gewählt werden kann, welcher insbesondere auch außerhalb vorgegebener Kochzonen liegen kann.

Auch das erfindungsgemäße Verfahren bietet die Vorteile, wie zuvor schon zu dem erfindungsgemäßen Kochgeschirr und dem erfindungsgemäßen Kochsystem ausgeführt wurden.

Bevorzugt wird das Kochgeschirr zur Kopplung mittels wenigsten einer Auflagefläche und/oder mittels wenigstens eines Auflagepunktes auf die Aufstellfläche der Kochfeldeinrichtung abgesetzt, um eine ausreichende räumliche Nähe zwischen der NFC-Einrichtung des Kochgeschirrs und der NFC-Einrichtung der Kochfeldeinrichtung zu bringen. Bei einer solchen Ausgestaltung ist das initiale Pairing per Bluetooth für den Benutzer besonders komfortabel, da er das Kochgeschirr während der Paarung über Bluetooth nicht die ganze Zeit in einer vorbestimmten Position über der Kochfeldeinrichtung halten muss.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochgeschirrs und eines erfindungsgemäßen Kochsystems mit einem solchen Kochgeschirr von der Seite;
- Figur 2: eine rein schematische Darstellung eines nächsten Ausführungsbeispiels eines erfindungsgemäßen Kochgeschirrs und eines erfindungsgemäßen Kochsystems mit einem solchen Kochgeschirr von der Seite;
- Figur 3: eine rein schematische Darstellung eines anderen Ausführungsbeispiels eines erfindungsgemäßen Kochgeschirrs und eines erfindungsgemäßen Kochsystems mit einem solchen Kochgeschirr von der Seite;
- Figur 4: eine rein schematische Darstellung eines weiteren Ausführungsbeispiels eines erfindungsgemäßen Kochgeschirrs und eines erfindungsgemäßen Kochsystems mit einem solchen Kochgeschirr von der Seite;
- Figur 5: eine rein schematische Darstellung eines nächsten Ausführungsbeispiels eines erfindungsgemäßen Kochgeschirrs und eines erfindungsgemäßen Kochsystems mit einem solchen Kochgeschirr von der Seite;
- Figur 6: eine rein schematische Darstellung eines anderen Ausführungsbeispiels eines erfindungsgemäßen Kochgeschirrs und eines erfindungsgemäßen Kochsystems mit einem solchen Kochgeschirr von der Seite;
- Figur 7: eine rein schematische Darstellung eines weiteren Ausführungsbeispiels eines erfindungsgemäßen Kochgeschirrs und eines erfindungsgemäßen Kochsystems mit einem solchen Kochgeschirr von der Seite;
- Figur 8: eine rein schematische Darstellung eines nächsten Ausführungsbeispiels eines erfindungsgemäßen Kochgeschirrs und eines erfindungsgemäßen Kochsystems mit einem solchen Kochgeschirr von der Seite;
- Figur 9: eine rein schematische Darstellung eines anderen Ausführungsbeispiels eines erfindungsgemäßen Kochgeschirrs und eines erfindungsgemäßen Kochsystems mit einem solchen Kochgeschirr von der Seite;
- Figur 10: eine rein schematische Darstellung eines weiteren Ausführungsbeispiels eines erfindungsgemäßen Kochgeschirrs und eines erfindungsgemäßen Kochsystems mit einem solchen Kochgeschirr von der Seite;
- Figur 11: eine rein schematische Darstellung eines nächsten Ausführungsbeispiels eines erfindungsgemäßen Kochgeschirrs und eines erfindungsgemäßen Kochsystems mit einem solchen Kochgeschirr von der Seite;
- Figur 12: eine rein schematische Darstellung eines anderen Ausführungsbeispiels eines erfindungsgemäßen Kochgeschirrs und eines erfindungsgemäßen Kochsystems mit einem solchen Kochgeschirr von der Seite;
- Figur 13: eine rein schematische Darstellung eines weiteren Ausführungsbeispiels eines erfindungsgemäßen Kochgeschirrs und eines erfindungsgemäßen Kochsystems mit einem solchen Kochgeschirr von der Seite;
- Figur 14: eine rein schematische Darstellung eines nächsten Ausführungsbeispiels eines erfindungsgemäßen Kochgeschirrs und eines erfindungsgemäßen Kochsystems mit einem solchen Kochgeschirr von der Seite;
- Figur 15: eine rein schematische Darstellung eines anderen Ausführungsbeispiels eines erfindungsgemäßen Kochgeschirrs und eines erfindungsgemäßen Kochsystems mit einem solchen Kochgeschirr von der Seite; und
- Figur 16: eine rein schematische Darstellung eines weiteren Ausführungsbeispiels eines erfindungsgemäßen Kochgeschirrs und eines erfindungsgemäßen Kochsystems mit einem solchen Kochgeschirr von der Seite.

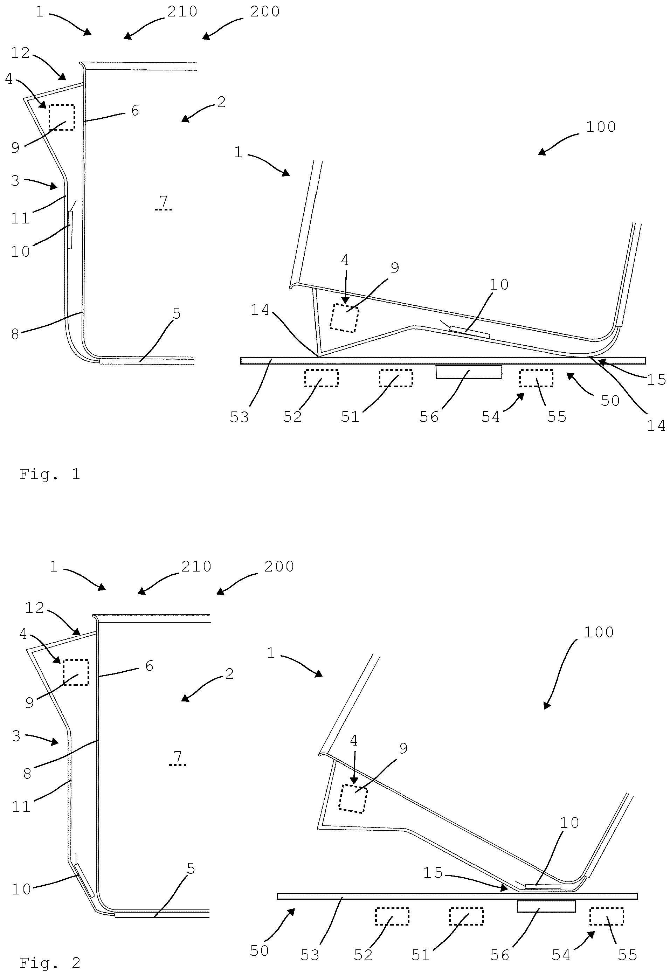

In Figur 1 In Figur 1 sind rein schematisch ein erfindungsgemäßes Kochgeschirr 1 und ein erfindungsgemäßes Kochsystem umfassend ein solches Kochgeschirr 1 und eine Kochfeldeinrichtung 50 in einer Seitenansicht dargestellt.

Das Kochgeschirr 1 umfasst einen Kochgeschirrgrundkörper 2, welche in dem gezeigten Ausführungsbeispiel einen Boden 5 und eine Wandung 6 umfasst, welche ein Aufnahmevolumen 7 zum Zubereiten von Speisen begrenzen. Weiterhin ist an der Außenseite 8 der Wandung 6 in dem gezeigten Ausführungsbeispielen ein Anbauteil 3 angeordnet.

Das Kochgeschirr 1 ist in dem hier gezeigten Ausführungsbeispiel als Topf 210 ausgebildet, wobei dieser in dem gezeigten Ausführungsbeispiel als sogenanntes Smartgeschirr 200 vorgesehen ist. Das Kochgeschirr 1 umfasst dabei hier nicht näher dargestellte Sensoren und eine Kommunikationseinrichtung 4 mit einer Bluetooth-Schnittstelle 9, mittels welcher das Kochgeschirr 1 mit einer Kochfeldeinrichtung 50 kommunizieren kann.

Die Kabel zu den Sensoren, welche beispielsweise dem Boden 5 und/oder der Wandung 6 zugeordnet sein können, können hier hinter dem Anbauteil 3 versteckt angeordnet werden, wobei das Anbauteil 3 in dem hier gezeigten Ausführungsbeispiel als Abdeckeinrichtung 11 ausgebildet ist. Das Anbauteil 3 umfasst hier zudem im oberen Bereich eine Bedieneinrichtung 12. Eine solche Bedieneinrichtung 12 kann je nach Ausgestaltung auch eine Anzeigeeinrichtung umfassen oder es kann auch eine separate Anzeigeeinrichtung vorgesehen sein.

Erfindungsgemäß umfasst das Kochgeschirr 1 bzw. das Smartgeschirr 200 weiterhin eine NFC-Einrichtung 10, welche in dem gezeigten Ausführungsbeispiel Teil der Kommunikationseinrichtung 4 ist bzw. mit dieser in Wirkverbindung steht. Durch die NFC-Einrichtung kann ein initiales Bluetooth-Pairing besonders sicher gestaltet werden, da zu dem initialen Bluetooth-Pairing eine räumliche Nähe zwischen der NFC-Einrichtung 10 des Kochgeschirrs 1 und einer NFC-Einrichtung 56 der Kochfeldeinrichtung 50 notwendig ist.

Das initiale Paaren von Kochgeschirr 1 und Kochfeldeinrichtung 50 ist in Figur 1 in der rechten Ansicht für ein Ausführungsbeispiel eines erfindungsgemäßen Kochsystems 100 rein schematisch dargestellt. Dabei ist dargestellt, dass die dem Anbauteil 3 zugeordnete NFC-Einrichtung 10 in eine bestimmte Position bzw. eine ausreichende räumliche Nähe zu der NFC-Einrichtung 56 der Kochfeldeinrichtung 50 gebracht werden muss, damit das initiale Bluetooth-Pairing initiiert und/oder beendet bzw. erfolgreich durchgeführt werden kann.

Die Kochfeldeinrichtung 50 umfasst dabei in dem gezeigten Ausführungsbeispiel eine Steuereinrichtung 51, mehrere Heizeinrichtungen 52, welche hier als Induktionsspulen ausgebildet sind, eine Kommunikationseinrichtung 54 mit einer Bluetooth-Schnittstelle 55 und eine Aufstellfläche 53 für Kochgeschirr.

In dem gezeigten Ausführungsbeispiel muss das Kochgeschirr 1 bzw. Smartgeschirr 100 bzw. der Topf 210 auf die Seite gekippt mit dem Anbauteil 3 auf die Aufstellfläche 53 der Kochfeldeinrichtung 50 aufgestellt werden, um in eine ausreichende räumliche Nähe zu der hier direkt unterhalb der Aufstellfläche angeordneten NFC-Einrichtung 56 der Kochfeldeinrichtung 50 gebracht zu werden.

Dazu stellt das Anbauteil 32 Auflagepunkte 14 zur Verfügung, welche je nach Ausgestaltung auch als Auflagefläche 15 ausgebildet sein können. Dadurch, dass das Kochgeschirr abgelegt werden kann bzw. abgestellt werden kann, ist das initiale Bluetooth-Pairing zwischen Kochgeschirr 1 und Kochfeldeinrichtung 50 besonders komfortabel.

Sobald die NFC-Einrichtung 10 des Kochgeschirrs 1 und die NFC-Einrichtung 56 der Kochfeldeinrichtung 50 in einer vorbestimmten bzw. ausreichend ausreichenden Nähe zueinander angeordnet sind, kann das initiale Bluetooth-Pairing zwischen Kochgeschirr 1 und Kochfeldeinrichtung 50 erfolgen. Dabei kann je nach Ausgestaltung beispielsweise erst nach einem Kontakt der NFC-Einrichtungen 10, 56 das Pairing initiiert werden. Es ist jedoch auch möglich, dass während des initialen Bluetooth-Pairings beispielsweise ein Freigabeschlüssel durch die NFC-Einrichtungen 10, 56 ausgetauscht wird und auch alle weiteren denkbaren technischen Möglichkeiten z. B. im Sinne einer Zweifaktor-Authentifizierung können vorteilhaft eingesetzt werden.

Damit ein besonders sicheres Bluetooth-Pairing erfolgen kann, ist erfindungsgemäß vorgesehen, dass die NFC-Einrichtung 10 des Kochgeschirrs in einer normalen Aufstellposition auf der Aufstellfläche 53 nicht in einer ausreichend nahen Distanz zu der NFC-Einrichtung 56 der Kochfeldeinrichtung 50 angeordnet ist.

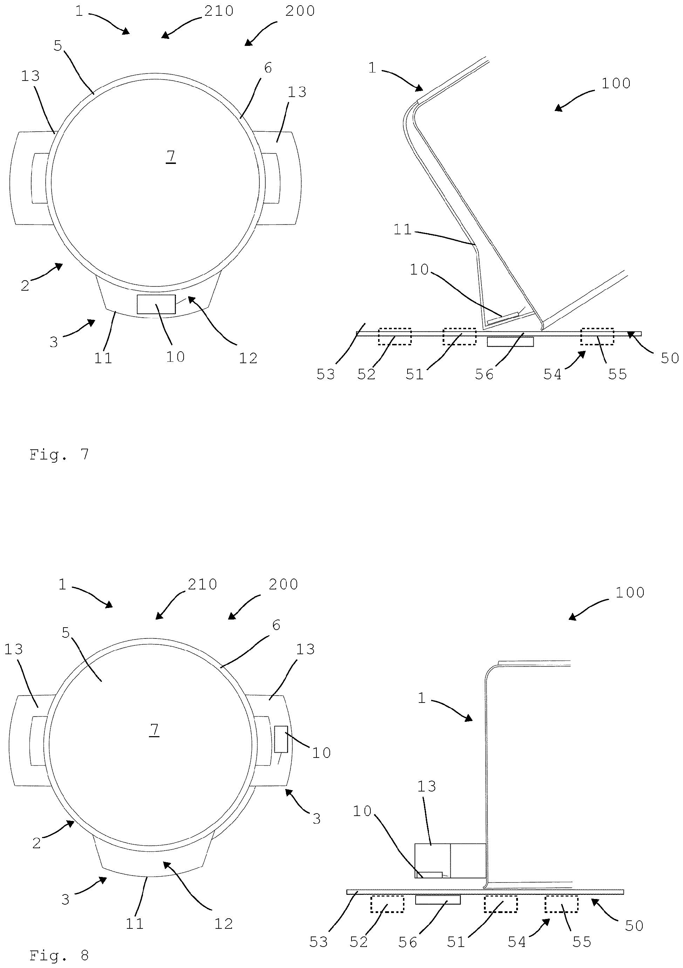

In den Figuren 2 bis 7 sind weitere Ausführungsbeispiele erfindungsgemäßer Kochgeschirre 1 jeweils mit einer Ansicht des entsprechenden Kochsystems 100 dargestellt. Dabei ist der Grundaufbau jedes Kochgeschirrs 1 und des entsprechenden Kochsystems 100 analog zu dem Ausführungsbeispiel gemäß Figur 1 vorgesehen. Lediglich die Position der NFC-Einrichtung 10 der Kochgeschirreinrichtung variiert.

Dabei ist in Figur 2 die NFC-Einrichtung 10 des Kochgeschirrs 1 beispielsweise im unteren Bereich der Abdeckeinrichtung 11 bzw. des Anbauteils 3 vorgesehen. Weiterhin wird durch eine spezielle Ausformung des Anbauteils 3 im unteren Bereich eine Auflagefläche 15 zur Verfügung gestellt.

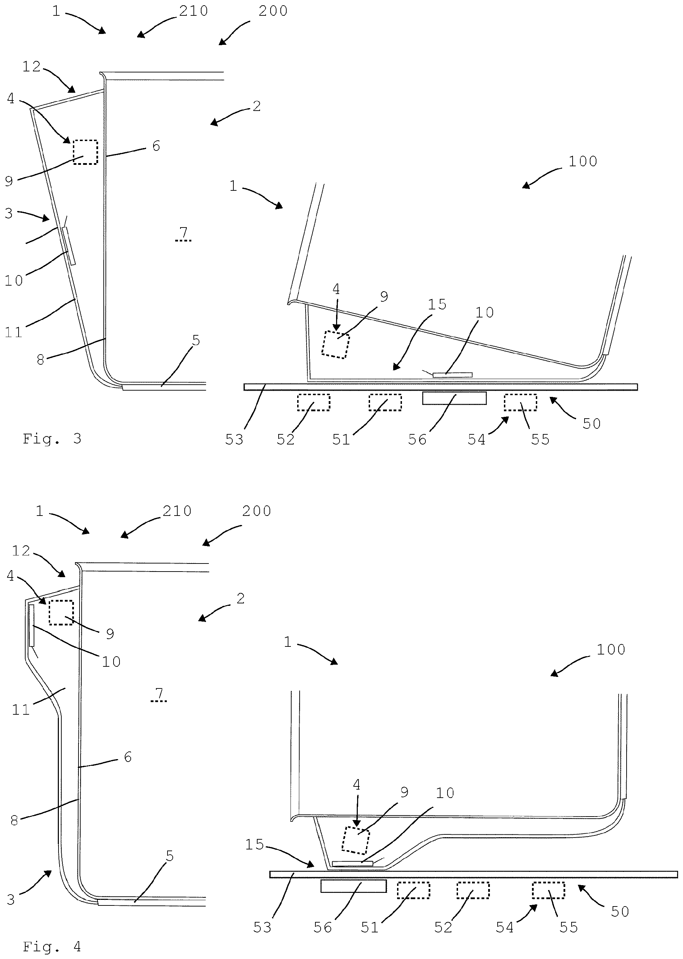

In Figur 3 ist eine spezielle Ausgestaltung der Abdeckeinrichtung 11 rein schematisch dargestellt, sodass diese vollflächig auf der Aufstellfläche 53 der Kochfeldeinrichtung 50 aufliegt.

In Figur 4 ist die NFC-Einrichtung 10 des Kochgeschirrs 1 in einem oberen seitlichen Bereich des Anbauteils 3 bzw. im Bereich der Bedieneinrichtung 12 vorgesehen.

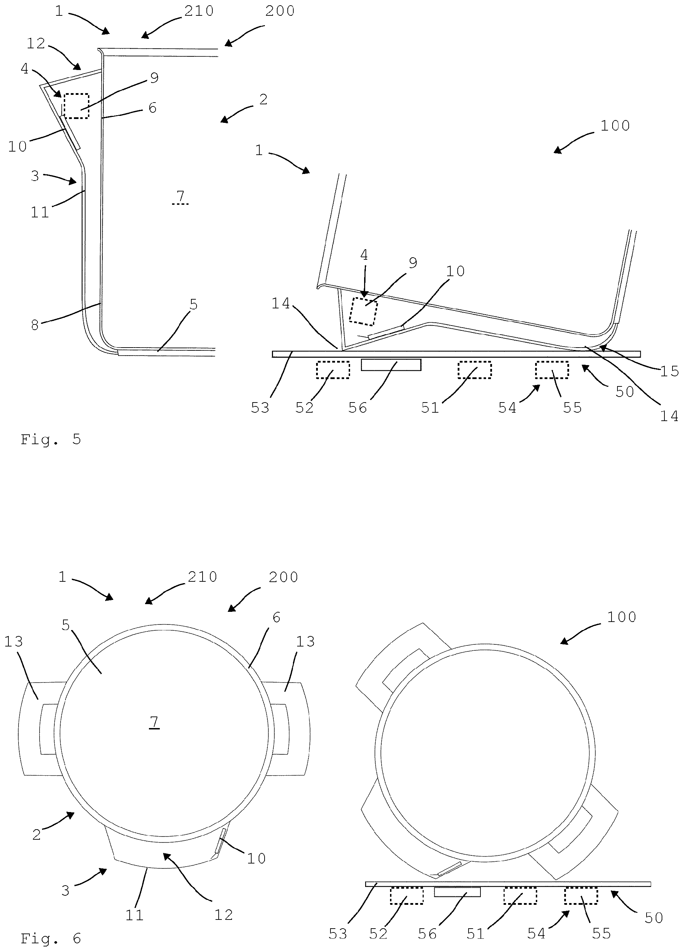

Auch in den Figuren 5, 6 und 7 sind die NFC-Einrichtung 10 im oberen Bereich des Anbauteils 3 bzw. der Abdeckeinrichtung 11 im Bereich einer möglichen Bedienungseinrichtung 12 angeordnet.

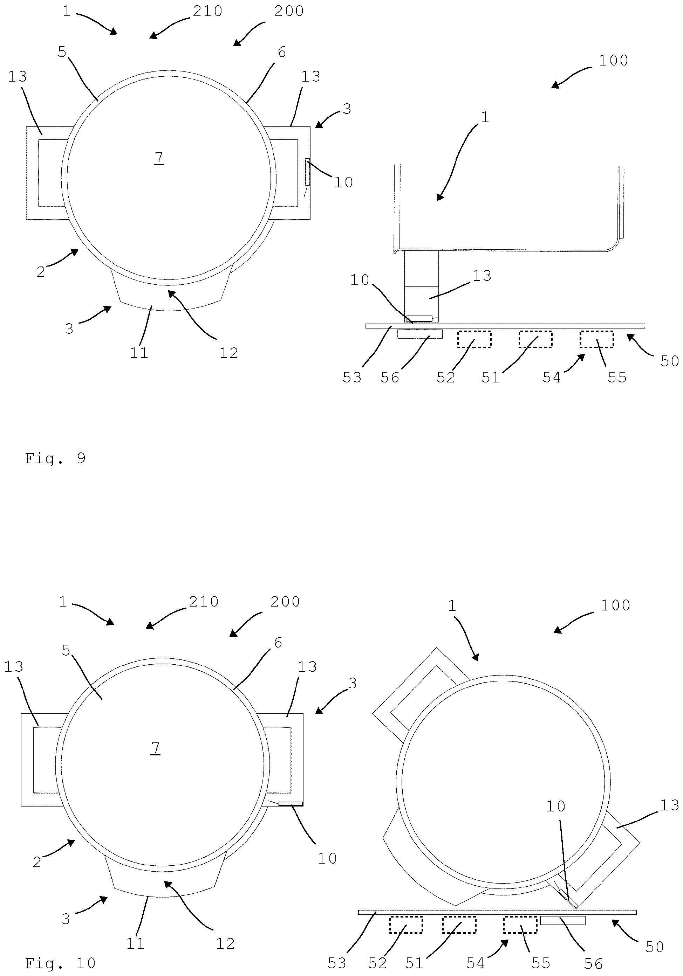

In Figur 9 ist rein schematisch dargestellt, dass die NFC-Einrichtung 10 des Kochgeschirrs 1 auch in einem Anbauteil 3 vorgesehen sein kann, welches durch eine Griffeinrichtung 13 zur Verfügung gestellt wird. Auf einer solchen Anordnung kann eine ein initiales Bluetooth-Pairing durch eine Annäherung der NFC-Einrichtungen 10, 56 von Kochgeschirr 1 und Kochfeldeinrichtung 50 erreicht werden.

Auch in Figur 9 und 10 sind die NFC-Einrichtungen 10 in die Griffeinrichtung 3 integriert.

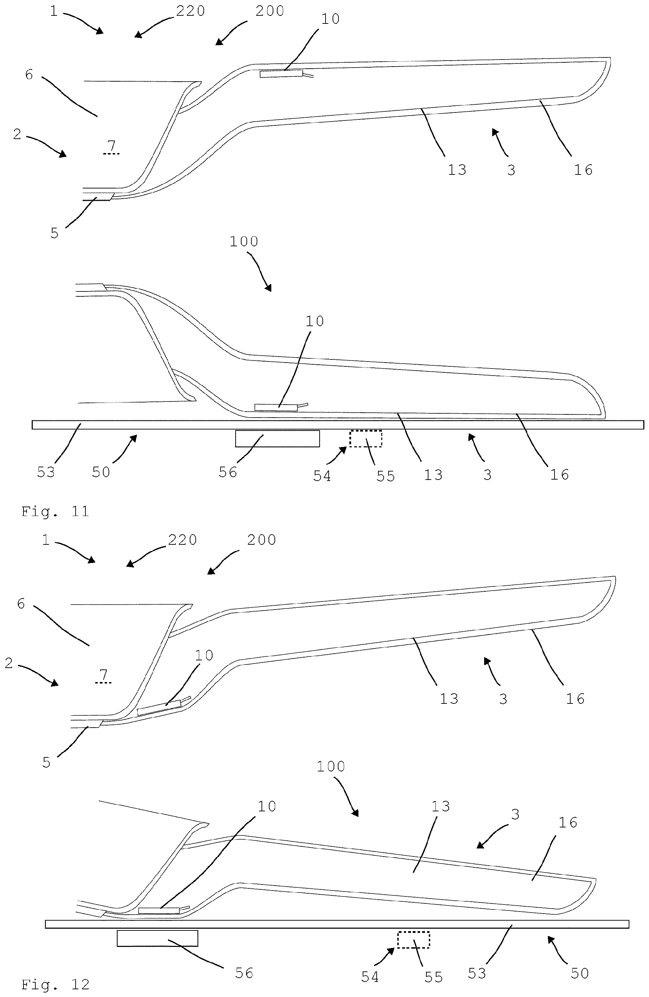

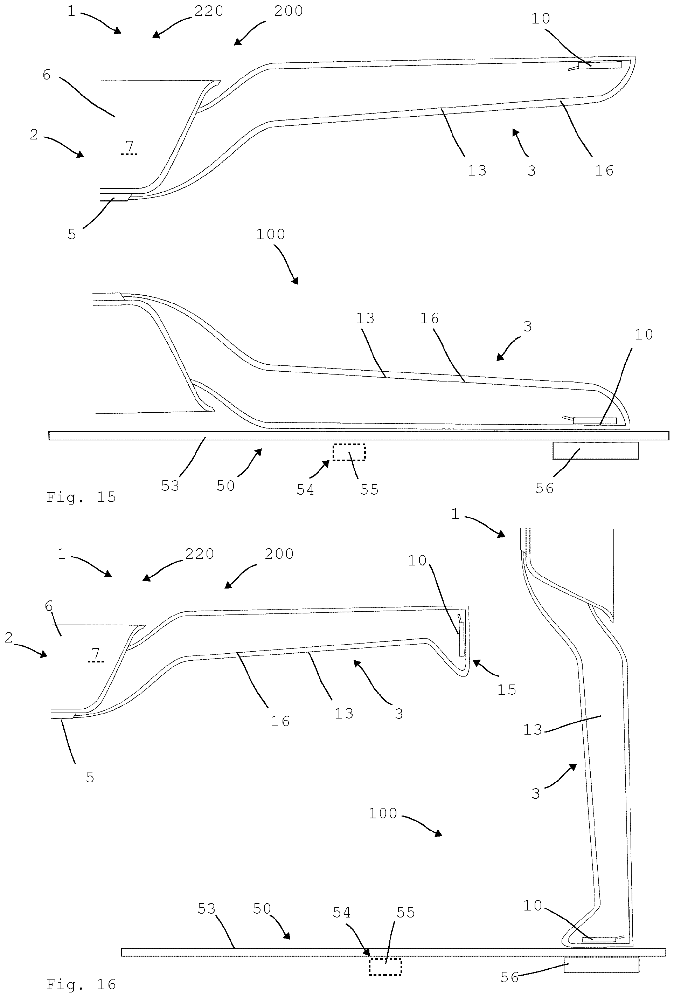

Die Figuren 11 bis 16 zeigen weitere Ausführungsbeispiele von erfindungsgemäßem Kochgeschirr 1 mit den jeweils daneben dargestellten entsprechenden Kochsystemen 100 umfassend ein solches Kochgeschirr 1 und eine Kochfeldeinrichtung 50.

Dabei sind in den nachfolgend beschriebenen Ausführungsbeispielen die Kochgeschirre 1 jeweils als Smartgeschirr 200 ausgebildet, welche hier jedoch nicht als Topf 210, sondern als Pfanne 220 vorgesehen sind.

In den gezeigten Ausführungsbeispielen dient dabei die Griffeinrichtung 13 jeweils zur Aufnahme der NFC-Einrichtung 10 und ist somit als Anbauteil 3 ausgebildet, welchem die NFC-Einrichtung erfindungsgemäß zugeordnet ist. Dabei ist hier wie bei Pfannen oft üblich die Griffeinrichtung 13 als Stilgriff 16 ausgeführt.

Wir zuvor schon bei den als Topf 210 ausgebildeten Ausführungsbeispielen sind auch hier unterschiedliche Positionen der NFC-Einrichtung 10 an bzw. in der Griffeinrichtung 13 dargestellt.

Dabei ist auch hier wichtig, dass in einer normalen Aufstellposition auf der Aufstellfläche 53 der Kochfeldeinrichtung 50 eine derart große Distanz zwischen den beiden NFC-Einrichtung 10, 56 von Kochgeschirr 1 und Kochfeldeinrichtung 50 vorgesehen sind, dass ein initiales Bluetooth-Pairing nur durch das normale Aufstehen des Kochgeschirrs 1 auf der Kochfeldeinrichtung 50 nicht erfolgen kann.

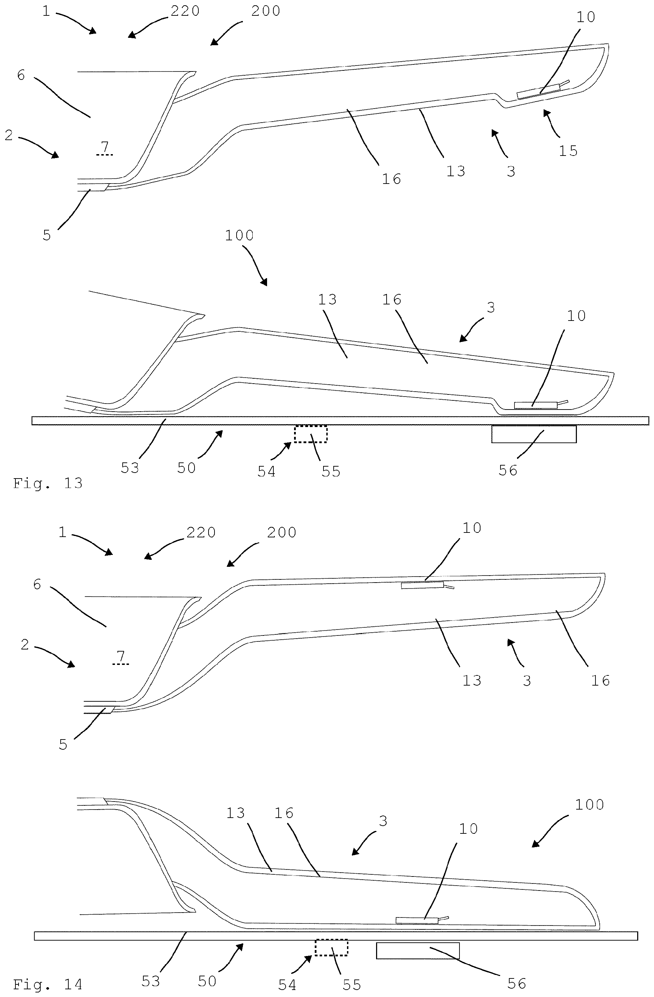

Um einen ausreichenden Abstand zwischen NFC-Einrichtung 10 von Kochgeschirr und NFC-Einrichtung 56 von Kochfeldeinrichtung 50 sicher zu gewährleisten, ist beispielsweise in Figur 14 die NFC-Einrichtung 10 des Kochgeschirrs 1 an der Seite der Griffeinrichtung 13 vorgesehen, welche im normalen Kochbetrieb abgewandt von der Aufstellfläche 53 der Kochfeldeinrichtung ist. So muss die Pfanne 220 bzw. das Kochgeschirr 1 zum erfolgreichen initialen Bluetooth-Pairing quasi kopfüber auf die Kochfeldeinrichtung 50 bzw. auf die Aufstellfläche 53 gelegt werden, um eine ausreichende Nähe zwischen den beiden NFC-Einrichtung 10, 56 zu erreichen.

### Bezugszeichenliste

- 1: Kochgeschirr
- 2: Kochgeschirrgrundkörper
- 3: Anbauteil
- 4: Kommunikationseinrichtung
- 5: Boden
- 6: Wandung
- 7: Aufnahmevolumen
- 8: Außenseite
- 9: Bluetooth-Schnittstelle
- 10: NFC-Einrichtung
- 11: Abdeckeinrichtung
- 12: Bedieneinrichtung
- 13: Griffeinrichtung
- 14: Auflagepunkt
- 15: Auflagefläche
- 16: Stielgriff
- 50: Kochfeldeinrichtung
- 51: Steuereinrichtung
- 52: Heizeinrichtung
- 53: Aufstellfläche
- 54: Kommunikationseinrichtung
- 55: Bluetooth-Schnittstelle
- 56: NFC-Einrichtung
- 100: Kochsystem
- 200: Smartgeschirr
- 210: Topf
- 220: Pfanne

## Patentansprüche

1. Kochgeschirr (1) umfassend wenigstens einen Kochgeschirrgrundkörper (2), wenigstens ein Anbauteil (3) und wenigstens eine Kommunikationseinrichtung (4), wobei der Kochgeschirrgrundkörper (2) wenigstens einen Boden (5) und wenigstens eine Wandung (6) umfasst und wobei durch den Boden (5) und die Wandung (6) wenigstens ein Aufnahmevolumen (7) begrenzt wird, wobei das Anbauteil (3) an der Außenseite (8) der Wandung (6) angeordnet ist, und wobei die Kommunikationseinrichtung (4) wenigstens eine Bluetooth-Schnittstelle (9) zur drahtlosen Kommunikation mit wenigstens einer Kochfeldeinrichtung (50) umfasst,
**dadurch gekennzeichnet,**
**dass** die Kommunikationseinrichtung (3) wenigstens eine NFC-Einrichtung (10) umfasst, wobei die NFC-Einrichtung (10) dem Anbauteil (3) zugeordnet ist.

2. Kochgeschirr (1) nach Anspruch 1, **dadurch gekennzeichnet, dass** das Anbauteil (3) wenigstens eine Abdeckeinrichtung (11) umfasst.

3. Kochgeschirr (1) nach einem der vorhergehenden Ansprüche, **dadurch gekennzeichnet, dass** das Anbauteil (3) wenigstens eine Bedieneinrichtung (12) umfasst.

4. Kochgeschirr (1) nach einem der vorhergehenden Ansprüche, **dadurch gekennzeichnet, dass** das Anbauteil (3) wenigstens eine Griffeinrichtung (13) umfasst.

5. Kochgeschirr (1) nach einem der vorhergehenden Ansprüche, **dadurch gekennzeichnet, dass** die Griffeinrichtung (13) länglich ausgeformt ist und dass die NFC-Einrichtung (10) an dem dem Kochgeschirrgrundkörper (2) abgewandten Ende angeordnet ist.

6. Kochgeschirr (1) nach einem der vorhergehenden Ansprüche, **dadurch gekennzeichnet, dass** das Anbauteil (3) wenigstens einen Auflagepunkt (14) und/oder wenigstens eine Auflagefläche (15) umfasst.

7. Kochgeschirr (1) nach einem der vorhergehenden Ansprüche, **dadurch gekennzeichnet, dass** die NFC-Einrichtung (10) an einer in der normalen Aufstellposition an der einer Kochfeldeinrichtung (50) abgewandten Seite des Anbauteils (3) angeordnet ist.

8. Kochsystem (100) umfassend wenigstens ein Kochgeschirr (1) nach einem der vorhergehenden Ansprüche und wenigstens eine Kochfeldeinrichtung (50), wobei die Kochfeldeinrichtung (50) wenigstens eine Steuereinrichtung (51), wenigstens eine Heizeinrichtung (52), wenigstens eine Aufstellfläche (53) für Kochgeschirr (1) und wenigstens eine Kommunikationseinrichtung (54) mit wenigstens einer Bluetooth-Schnittstelle (55) und wenigstens einer NFC-Einrichtung (55) umfasst.

9. Verfahren zum Betreiben eines Kochsystems (100) nach einem der vorhergehenden Ansprüche, wobei zur initialen Kopplung per Bluetooth von Kochgeschirr (1) und Kochfeldeinrichtung (50) die NFC-Einrichtung (10) des Kochgeschirrs (1) in eine ausreichende räumliche Nähe zu der NFC-Einrichtung (56) der Kochfeldeinrichtung (50) gebracht wird, um die Kopplung per Bluetooth freizugeben.

10. Verfahren nach dem vorhergehenden Anspruch, **dadurch gekennzeichnet, dass** das Kochgeschirr (1) zur Kopplung mittels wenigstens einer Auflagefläche (15) und/oder mittels wenigstens eines Auflagepunktes (14) auf die Aufstellfläche (53) der Kochfeldeinrichtung (50) abgesetzt wird, um eine ausreichende räumliche Nähe zwischen der NFC-Einrichtung (10) des Kochgeschirrs (1) und der NFC-Einrichtung (56) der Kochfeldeinrichtung (50) zu erreichen.
